# EUROPÄISCHE PATENTSCHRIFT

(11) **EP 2 340 912 B1**
(45) Veröffentlichungstag und Bekanntmachung des Hinweises auf die Patenterteilung: **18.06.2014**
(21) Anmeldenummer: 10015628.0
(22) Anmeldetag: 14.12.2010
(51) Int. Cl.: B23K 33/00

(54) **Rohrelement mit einer Schnittkante zum Anschweissen an ein Trägerelement**
Pipe element with a cut edge for welding onto a carrier element
Elément de tuyau doté d'un bord de coupe pour souder sur un élément de support

(30) Priorität: 31.12.2009 DE 102009060795
(43) Veröffentlichungstag der Anmeldung: 06.07.2011
(73) Patentinhaber: Liebherr-Werk Nenzing GmbH, 6710 Nenzing (AT)
(72) Erfinder: Dolzer, Heimo, 6707 Bürserberg (AT); Arzt, Ephraim, 6712 Thüringen (AT)
(74) Vertreter: Laufhütte, Dieter

(56) Entgegenhaltungen:
- EP-A1- 0 870 572
- EP-A2- 0 048 403
- DE-C1- 3 032 357
- GB-A- 527 107
- JP-A- 49 055 544
- JP-A- 54 049 938
- JP-A- 59 127 980
- JP-A- 60 216 977
- US-A- 3 062 567
- US-A- 4 274 621
- US-A- 5 190 207

## Beschreibung

Die vorliegende Erfindung betrifft ein Rohrelement mit einer Schnittkante zum Anschweißen an ein Trägerelement, wobei die Schnittkante so aus einem Grundrohr geschnitten ist, daß das Rohrelement auf der Oberfläche des Trägerelements angeordnet und entlang der Schnittkante mit dieser verschweißt werden kann.

Ein Rohrelement nach dem Oberbegriff des Anspruchs 1 ist aus der EP 0 870 572 A1 bekannt.

Das Erzeugen einer Schnittkante durch Ausschneiden aus einem Grundrohr hat dabei gegenüber anderen Verfahren zur Herstellung eines Verschweißungsbereichs, wie zum Beispiel dem Umformen des Rohrendes durch einen Stempel, erhebliche Vorteile insbesondere hinsichtlich der Prozeßführung sowie der erreichbaren Verbindungsqualität.

Dabei wird die Schnittkante üblicherweise so aus dem Grundrohr geschnitten, daß das Rohrelement entlang der Schnittkante vollumfänglich auf der Oberfläche des Trägerelements aufliegt. Allerdings können sich hierdurch Probleme hinsichtlich eines prozeßsicheren Durchschweißens ergeben. Um die Durchschweißung zu verbessern, kann die Schnittkante nach außen angeschrägt werden, so daß sie nur noch auf ihrer Innenseite ringförmig auf der Oberfläche des Trägerelements aufliegt und sich ein Schweißbereich mit dem Querschnitt eines Dreiecks ergibt. Allerdings ist auch bei einem solchen Rohrelement gerade bei einem automatisierten Schweißverfahren keine optimale Durchschweißung erreichbar.

Zur weiteren Verbesserung der Durchschweißung ist es bekannt, an der Schnittkante eine Nocke vorzusehen, mit welcher das Rohrelement auf der Oberfläche des Trägerelements aufgesetzt wird, während im übrigen Bereich ein Luftspalt zwischen der Oberfläche des Trägerelements und der Schnittkante verbleibt. Die Nocke ist dabei in dem Bereich der Schnittkante angeordnet, in welchem die Oberfläche des Rohrelements einen so spitzen Winkel mit der Oberfläche des Trägerelements einnimmt, daß dort ohnehin nur mittels eine Kehlnaht eingesetzt werden kann.

Bei diesem Vorgehen muß das Rohrelement jedoch insbesondere hinsichtlich des Anstellwinkels äußerst genau am Trägerelement positioniert und während des Verschweißprozesses in dieser Position gehalten werden, um gute Schweißergebnisse zu erreichen. Insbesondere bei einer automatischen Verschweißung ergeben sich so erhebliche Qualitätsprobleme.

Aufgabe der vorliegenden Erfindung ist es daher, die bekannten Verfahren und dabei eingesetzten Rohrelemente so weiter zu entwickeln, daß die Prozeßsicherheit beim Verschweißen verbessert wird.

Diese Aufgabe wird erfindungsgemäß durch ein Rohrelement gemäß Anspruch 1 gelöst.

Die vorteilhaften Ausgestaltungen der vorliegenden Erfindung sind Gegenstand von Unteransprüchen. Weiterhin umfaßt die vorliegende Erfindung in nebengeordneten Ansprüchen ein Set aus einem erfindungsgemäßen Rohrelement und einem Trägerelement, ein Bauteil, welches ein erfindungsgemäßes Rohrelement und ein Trägerelement umfaßt, eine Bau- oder Umschlagmaschine mit einem entsprechenden Bauteil, eine Maschine zum automatischen Schneiden einer erfindungsgemäßen Schnittkante, sowie Verfahren zum Herstellen eines erfindungsgemäßen Rohrelements sowie zum Verschweißen eines solchen Rohrelements.

Das erfindungsgemäße Rohrelement weißt dabei eine Schnittkante zum Anschweißen an ein Trägerelement auf, welche so aus einem Grundrohr geschnitten ist, daß das Rohrelement auf der Oberfläche des Trägerelements angeordnet und entlang der Schnittkante mit dieser verschweißt werden kann. Die Schnittkante weist dabei mindestens eine erste und eine zweite Nocke auf, mit welchen sie auf der Oberfläche des Rohrelements aufsetzbar ist. Hierdurch verbleibt in einem zwischen der ersten Nocke und der zweiten Nocke angeordneten Bereich ein Luftspalt zwischen der Oberfläche des Trägerelements und der Schnittkante.

Im Stand der Technik mußte die Größe des Luftspalts dadurch eingestellt werden, daß das Rohrelement während des Schweißprozesses in einem definierten Winkel am Trägerelement gehalten wurde. Durch den Einsatz von mindestens zwei Nocken nimmt das Rohrelement beim Aufsetzen auf das Trägerelement dagegen schon durch die Form der Schnittkante einen definierten Winkel zum Trägerelement ein.

In der vorliegenden Erfindung bilden die Nocken dabei jeweils Vorsprünge bezüglich einer gedachten Schnittkante, welche einer umlaufende Kontaktlinie zwischen dem Rohrelement und der Oberfläche des Trägerelements entsprechen würde, so daß zwischen den Nocken ein Luftspalt zwischen den Oberfläche des Trägerelements und der Schnittkante verbleibt.

Durch den Einsatz einer Schnittkante mit mindestens zwei Nocken, mit welchen das Rohrelement auf der Oberfläche des Trägerelements aufsetzbar ist, ergibt sich so eine prozeßsichere Möglichkeit zur Bereitstellung eines Luftspalts im Bereich zwischen den Nocken. Hierdurch läßt sich insbesondere auch bei einem automatisierten Schweißverfahren ein hervorragendes Schweißergebnis erreichen. Vorteilhafterweise kann dabei im Bereich des Luftspalts eine Durchschweißung erreicht werden.

Das erfindungsgemäße Rohrelement ist dabei aus einem Grundrohr ausgeschnitten, welches entlang seiner Längsachse ein gleichbleibendes, geschlossenes Profil aufweist. Vorteilhafterweise ist das Rohrelement damit hohlzylinderförmig. Insbesondere handelt es sich bei dem Grundrohr bzw. Rohrelement vorteilhafterweise um ein Stahlrohr.

Erfindungsgemäß ist auch das Trägerelement rohrförmig, weist also ein gleichbleibendes, geschlossenes Profil auf. Die vorliegende Erfindung kommt bei einem Trägerelement zum Einsatz, dessen Oberfläche ebenfalls zylinderförmig ist. Vorteilhafterweise handelt es sich auch bei dem Trägerelement um ein Stahlrohr.

Weiterhin kann die vorliegende Erfindung insbesondere dann eingesetzt werden, wenn der Durchmesser des Rohrelements kleiner ist als der Durchmesser des Trägerelements.

Die Höhe des Luftspaltes wird vorteilhafterweise bei auf der Oberfläche des Trägerelements aufgesetzter Schnittkante allein durch die Form der Schnittkante und die Oberfläche des Trägerelements bestimmt, so daß sich durch die Nocken ein definierter Luftspalt ergibt. Dies kann durch eine entsprechende Länge mindestens einer der Nocken und/oder die Verwendung von mindestens drei Nocken erreicht werden, da durch drei entsprechend angeordnete Auflagepunkte eine eindeutige Ausrichtung des Rohrelements vorgegeben ist. Insbesondere sollten dabei drei oder mehr Auflagepunkte über einen Winkelbereich von mehr als 180° angeordnet sein. Weiterhin sollte sich jeder der zusammenhängenden Luftspalte über einen Winkelbereich kleiner als 180°, weiterhin vorteilhafterweise kleiner als 150°, weiterhin vorteilhafterweise kleiner als 130° erstrecken.

Weiterhin vorteilhafterweise ist vorgesehen, daß die Schnittkante eine dritte Nocke aufweist, mit welcher sie auf der Oberfläche des Rohrelements aufsetzbar ist. Durch den Einsatz einer dritten Nocke wird die Prozeßsicherheit weiter erhöht, da die Position des Rohrelements gegenüber dem Trägerelement durch drei Aufsetzpunkte festgelegt ist. Erfindungsgemäß verbleibt dabei in den zwischen den Nocken angeordneten Bereichen ein definierter Luftspalt zwischen der Oberfläche des Trägerelements und der Schnittkante. Vorteilhafterweise weist die Schnittkante dabei genau drei Nocken auf.

Vorteilhafterweise verläuft die Mittelachse des Rohrelements dabei in einem spitzen Winkel zur Mittelachse des Trägerelements. Vorteilhafterweise kommt die vorliegende Erfindung dabei bei Verbindungen zum Einsatz, bei welchen der Winkel zwischen den beiden Mittelachsen kleiner als 85°, weiterhin vorteilhafterweise kleiner als 80° ist. Dabei können sich die beiden Mittelachsen schneiden.

Weiterhin vorteilhafterweise ist vorgesehen, daß das erfindungsgemäße Rohrelement an seinen beiden Enden jeweils eine erfindungsgemäße Schnittkante aufweist, so daß es zwischen zwei Trägerelemente eingeschweißt werden kann. Insbesondere handelt sich bei dem Rohrelement dabei um ein Diagonalrohr, welches zwei parallel verlaufende Trägerelemente verbindet.

Weiterhin vorteilhafterweise ist die erste Nocke in einem Bereich angeordnet, in dem die Oberfläche des Rohrelements mit der Oberfläche des Trägerelements einen spitzen Winkel einschließt. In diesem Bereich kann üblicherweise ohnehin nur eine Kehlnaht vorgesehen werden, da aufgrund des spitzen Winkels eine Durchschweißung nicht möglich ist. Die Verbindungsqualität in diesem Bereich leidet daher durch die erste Nocke nicht.

Weiterhin vorteilhafterweise ist vorgesehen, daß in einem zweiten Bereich, in welchem die Oberfläche des Rohrelements mit der Oberfläche des Trägerelements einen stumpfen Winkel einschließt, ein Luftspalt zwischen der Oberfläche des Trägerelements und der Schnittkante verbleibt. In diesem Bereich ist durch den Luftspalt eine gute Durchschweißung möglich. Vorteilhafterweise liegt dabei der zweite Bereich mit dem Luftspalt der ersten Nocke bezüglich der Mittelachse des Rohrelements gegenüber.

Weiterhin vorteilhafterweise sind die zweite und/oder die dritte Nocke in einem Bereich angeordnet, in welchem die Oberfläche des Rohrelements mit der Oberfläche des Trägerelements einen stumpfen Winkel einschließt. Die zweite und/oder dritte Nocke garantierten so einen definierten, prozeßsicher herstellbaren Luftspalt. Um die Durchschweißung in diesen Bereichen möglichst wenig zu beeinträchtigen, ist dabei die zweite und/oder dritte Nocke kürzer als die erste Nocke, bei welcher ohnehin keine Durchschweißung erfolgen kann.

Der oben angegebene Winkel zwischen der Oberfläche des Rohrelements und der Oberfläche des Trägerelements wird dabei in einer Ebene gemessenen, in welcher die Mittelachse des Rohrelements verläuft.

Durch die vorliegende Erfindung verbleibt bei auf das Trägerelement aufgesetztem Rohrelement im Bereich des Luftspalts eine Öffnung zwischen dem Innenraum des Rohrelements und dem Außenraum, welche durch die Schnittkante und die Oberfläche des Trägerelements begrenzt wird. Die Höhe des Luftspalts ist dabei als die über die Dicke der Wandung des Rohrelements gesehen kleinste Höhe dieser Öffnung definiert, gemessen in Normalrichtung zur Oberfläche des Trägerelements.

Erfindungsgemäß weist der Luftspalt dabei über seine Länge eine im wesentlichen konstante Höhe auf. Dies kann insbesondere dadurch erreicht werden, daß die Kontur der Schnittkante im Bereich des Luftspalts im wesentlichen einer gedachten Schnittlinie zwischen dem Rohrelement und der Oberfläche des Trägerelements entspricht. Insbesondere kann vorgesehen sein, daß die Innenkante der Schnittkante im Bereich des Luftspalts im einer gedachten Schnittlinie zwischen der Innenseite des Rohrelement und der Oberfläche des Trägerelements entspricht. Weiterhin vorteilhafterweise weist der Luftspalt über seine Länge eine Höhe zwischen 1 mm und 3 mm auf, vorteilhafterweise circa 2 mm. Hierdurch konnten die besten Ergebnisse für die Verschweißung erzielt werden.

Selbstverständlich bestehen jedoch zwischen dem Bereich des Luftspaltes und dem Bereich der Nocken Übergangszonen. In diesen geht die Höhe des Luftspalts von seiner Sollgröße auf Null herunter. Vorteilhafterweise beträgt die Gesamtlänge dieser Übergangszonen weniger als 30 % der Gesamtlänge der Luftspalte, weiterhin vorteilhafterweise weniger als 10 %, weiterhin vorteilhafterweise weniger als 5 %.

Weiterhin vorteilhafterweise ist die Schnittkante im Bereich des Luftspalts nach au-βen angeschrägt. Der Raum zwischen der Schnittkante und der Oberfläche des Trägerelements vergrößert sich so von der Innenseite der Wandung des Rohrelements zur Außenseite hin. Auch hierdurch kann die Verschweißqualität verbessert werden.

Weiterhin vorteilhafterweise liegen die Mittelpunkte der Nocken mindestens 60°, vorteilhafterweise mindestens 90° und weiterhin vorteilhafterweise 120° voneinander entfernt. Hierdurch wird ein besonders prozeßsicheres Aufsetzen des Rohrelements auf der Oberfläche des Trägerelements erreicht.

Weiterhin vorteilhafterweise weist die Kontaktlinie der Schnittkante mit der Oberfläche des Trägerelements im Bereich der ersten Nocke eine Länge zwischen 20° und 100° auf, weiterhin vorteilhafterweise zwischen 40° und 80°, weiterhin vorteilhafterweise von ca. 60°. Dies ist insbesondere dann sinnvoll, wenn die erste Nocke in einem Bereich liegt, in welchem die Oberfläche des Rohrelements mit der Oberfläche des Trägerelements einen spitzen Winkel einnimmt. Hier ist ohnehin nur eine Kehlnaht möglich, so daß durch die Ausdehnung der ersten Nocke in die Länge eine größere Auflagefläche erreicht wird, ohne die Verschweißqualität zu mindern. Vorteilhaftenrveise liegt die Schnittkante im Bereich der ersten Nocke flächig auf der Oberfläche des Trägerelements auf. Hierdurch wird eine gute Abstützung erreicht.

Weiterhin vorteilhafterweise ist vorgesehen, daß die Kontaktlinie der Schnittkante mit der Oberfläche des Trägerelements im Bereich der zweiten und/oder dritten Nocke kürzer als im ersten Bereich ist, wobei weiterhin vorteilhafterweise die Länge im Bereich der zweiten oder dritten Nocke weniger als 20 % der Länge im ersten Bereich beträgt, weiterhin vorteilhafterweise weniger als 10 %.

Weiterhin vorteilhafterweise ist die Kontaktlinie der Schnittkante mit der Oberfläche des Trägerelements im Bereich der zweiten und/oder dritten Nocke weniger als 20° lang, weiterhin vorteilhafterweise weniger als 10 %. Vorteilhafterweise ist dabei der Kontakt im Bereich der zweiten und/oder dritten Nocke im wesentlichen punktförmig. Dies ist insbesondere dann von Vorteil, wenn die zweite und oder dritte Nocke in einem Bereich angeordnet sind, in welchem Verschweißung der Schnittfläche mit der Oberfläche des Trägerelements möglich ist. Daher sollten die Nocken in diesem Bereich möglichst kurz ausgeführt sein.

Weiterhin vorteilhafterweise ist vorgesehen, daß die Gesamtlinie der Kontaktlinie der Schnittkante mit der Oberfläche des Trägerelements eine Länge von weniger als 120°, weiterhin vorteilhafterweise von weniger als 100° und weiterhin vorteilhafterweise weniger als 80° aufweist. Hierdurch wird sichergestellt, daß eine gute Durchschweißung in einem möglichst großen Bereich erreicht wird.

Die oben genannten Winkel sind dabei definiert als der Winkel zwischen zwei Ebenen, welche sich in der Mittelachse des Rohrelements schneiden und durch die jeweiligen Punkte verlaufen.

Die vorliegende Erfindung umfaßt weiterhin ein Set aus einem Rohrelement, wie es oben beschrieben wurde, und einem Trägerelement. Ein solches Set ermöglicht eine besonders prozeßsicher herstellbare Verschweißung. Vorteilhafterweise ist dabei auch das Trägerelement rohrförmig ausgeführt. Weiterhin vorteilhafterweise umfaßt das Set zwei Trägerelemente, welche über das Rohrelement verbindbar sind.

Die vorliegende Erfindung umfaßt weiterhin ein Bauteil, bei welchem Bauteil ein erfindungsgemäßes Rohrelement mit einem Trägerelement entlang der Schnittkante verschweißt wurde. Insbesondere handelt es sich bei dem erfindungsgemäßen Bauteil um ein Gitterstück. Vorteilhafterweise bildet dabei das Trägerelement eine Längsstrebe, während das Rohrelement eine Diagonalstrebe bildet. Vorteilhafterweise sind dabei mindestens zwei Längsstreben vorgesehen, zwischen welchen mehrere erfindungsgemäße Rohrelemente als Diagonalstreben eingeschweißt sind.

Die vorliegende Erfindung umfaßt weiterhin eine Bau- oder Umschlagmaschine, insbesondere einen Kran, mit einem erfindungsgemäßen Bauteil. Insbesondere handelt es sich bei dem Bauteil dabei um ein Gitterstück eines Auslegers der Bau-oder Umschlagmaschine. Insbesondere ist der Ausleger dabei aus mehreren erfindungsgemäßen Gitterstücken zusammengesetzt.

Die vorliegende Erfindung umfaßt weiterhin eine Maschine zum automatischen Schneiden einer Schnittkante eines Rohrelementes, wie es oben beschrieben wurde, aus einem Grundrohr. Erfindungsgemäß umfaßt die Maschine dabei eine Steuerung, welche so programmiert wurde, daß eine erfindungsgemäße Schnittkante automatisch herstellbar ist.

Vorteilhafterweise weist die Maschine dabei eine Vorrichtung auf, durch welche ein Schneidwerkzeug am Grundrohr entlang der gewünschten Schnittkante geführt werden kann. Die Relativbewegung zwischen Grundrohr und Schneidwerkzeug kann dabei durch ein Bewegen des Grundrohrs und/oder ein Bewegen des Schneidwerkzeugs erfolgen. Vorteilhafterweise weist die Maschine dabei eine Drehvorrichtung zum Drehen des Grundrohrs um seine Mittelachse auf. Weiterhin vorteilhafterweise weist die Maschine ein Schneidwerkzeug auf, welches in Längsrichtung des Rohres so bewegbar ist, daß eine erfindungsgemäße Schnittkante erzeugbar ist. Vorteilhafterweise ist das Schneidwerkzeug dabei weiterhin schwenkbar, um eine Schräge der Schneidkante zu erzeugen. Vorteilhafterweise handelt es sich bei dem Schneidwerkzeug um einen Brennschneider.

Die vorliegende Erfindung umfaßt weiterhin ein Verfahren zum Herstellen eines Rohrelementes, wie es oben beschrieben wurde. Erfindungsgemäß wird dabei ein Schneidwerkzeug an dem Grundrohr entlang der gewünschten Schnittkante geführt, um diese herzustellen. Die Führung des Schneidwerkzeugs entlang der Schnittkante kann dabei durch ein Bewegen des Grundrohrs und/oder durch ein Bewegen des Schneidwerkzeugs erfolgen. Vorteilhafterweise wird dabei das Grundrohr um seine Mittelachse gedreht, während das Schneidwerkzeug in Längsrichtung des Grundrohrs bewegt wird, um die gewünschte Form der Schnittkante zur Verfügung zu stellen. Vorteilhafterweise wird das Schneidwerkzeug dabei zudem verschwenkt, um eine gewünschte Schräge der Schnittkante zu erzeugen.

Vorteilhafterweise wird die Schnittkante dabei automatisch erzeugt, indem entsprechende Antriebe einer Maschine durch eine entsprechend programmierte Steuerung angesteuert werden.

Die vorliegende Erfindung umfaßt weiterhin ein Verfahren zum Herstellen eines Bauteils, insbesondere eines Gitterstückes, durch Verschweißen eines erfindungsgemäßen Rohrelements mit einem Trägerelement. Das Verfahren umfasst dabei das Aufsetzen des Rohrelements auf der Oberfläche des Trägerelements, so daß die Schnittkante mit den Nocken auf der Oberfläche aufliegt, und das Verschweißen von Rohrelement und Trägerelement entlang der Schnittkante. Durch die mindestens zwei Nocken der Schnittkante kann durch das Aufsetzen des Rohrelements prozeßsicher ein definierter Luftspalt zwischen der Schnittkante und der Oberfläche des Trägerelements erreicht werden, wodurch eine qualitativ hochwertige Verschweißung von Rohrelement und Trägerelement erreicht wird.

Vorteilhafterweise wird dabei ein Schweißwerkzeug entlang der Schnittkante geführt, um die Verschweißung herzustellen. Vorteilhafterweise erfolgt dabei die Verschweißung automatisch. Diese erfolgt insbesondere dadurch, daß Antriebe einer Verschweißmaschine von einer entsprechend programmierten Steuerung entsprechend angesteuert werden.

Vorteilhafterweise wird dabei im Bereich der ersten Nocke eine Kehlnaht zwischen den Oberflächen von Rohrelement und Trägerelement erzeugt. Eine Kehlnaht wird insbesondere dann vorgesehen, wenn die Oberfläche des Rohrelements im Bereich der ersten Nocke mit der Oberfläche des Trägerelements einen so spitzen Winkel einnimmt, daß eine Durchschweißung nicht möglich ist.

Weiterhin vorteilhafterweise wird im Bereich des Luftspalts eine Verschweißung der Schnittkante mit der Oberfläche des Trägerelements erzeugt. Insbesondere wird hierdurch die komplette Schnittkante mit der Oberfläche des Trägerelements verschweißt. Hierdurch wird im Bereich des Luftspalts eine besonders stabile Verbindung erreicht.

Vorteilhafterweise wird dabei zunächst die Kehlnaht geschweißt. Daraufhin wird vorteilhafterweise die Verschweißung im übrigen Bereich der Schnittkante vorgenommen.

Weiterhin vorteilhafterweise erfolgt die Verschweißung entlang der Schnittkante dabei von einem Ende der ersten Nocke entlang des Luftspalts über die zweite und gegebenenfalls dritte Nocke hinweg zum anderen Ende der ersten Nocke. Vorteilhafterweise wird dabei ein Schweißwerkzeug entlang dieser Linie bewegt.

Das Verfahren zum Herstellen des Bauteils umfaßt dabei das Bereitstellen eines erfindungsgemäßen Rohrelements, insbesondere den Schritt des Herstellens eines solchen Rohrelements gemäß dem oben beschriebenen Verfahren.

Die vorliegende Erfindung wird nun anhand eines Ausführungsbeispiels sowie Zeichnungen näher dargestellt:

Dabei zeigen:
- Figur 1: eine perspektivische Ansicht eines Ausführungsbeispiels eines erfindungsgemäßen Rohrelements mit einer Schnittkante,
- Figur 2: eine Vorderansicht des auf ein Trägerelement aufgesetzten erfindungsgemäßen Rohrelements,
- Figur 3: eine Seitenansicht der in Figur 2 gezeigten Situation, und
- Figur 4: eine Prinzipdarstellung der Aufteilung einer erfindungsgemäßen Schnittkante.

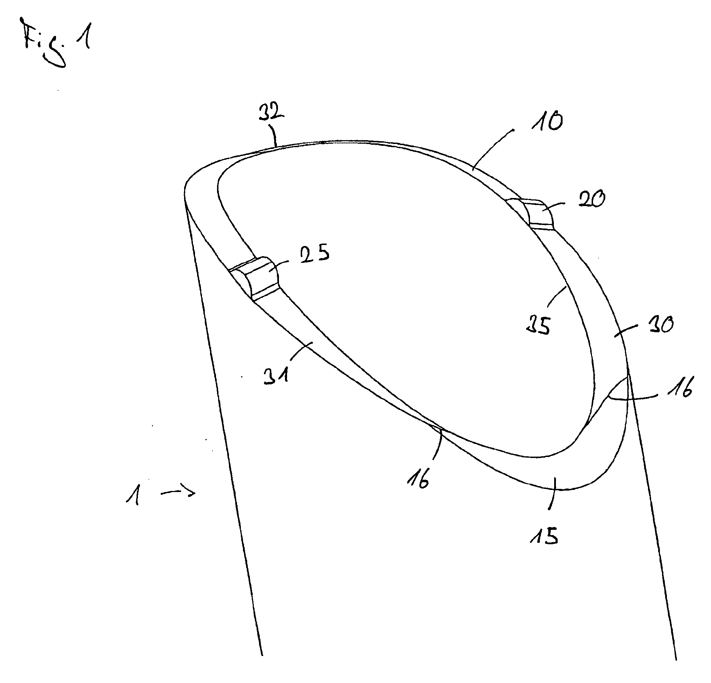

Figur 1 zeigt ein Ausführungsbeispiel eines erfindungsgemäßen Rohrelements, bei welchem das Rohrelement die Form eines Hohlzylinders aufweist. Im Ausführungsbeispiel handelt es sich dabei um ein Stahlrohr.

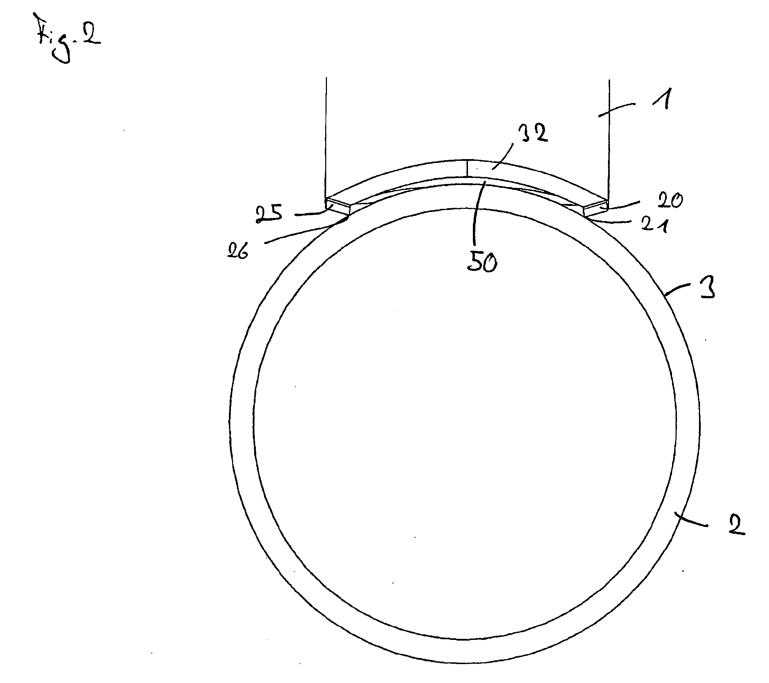

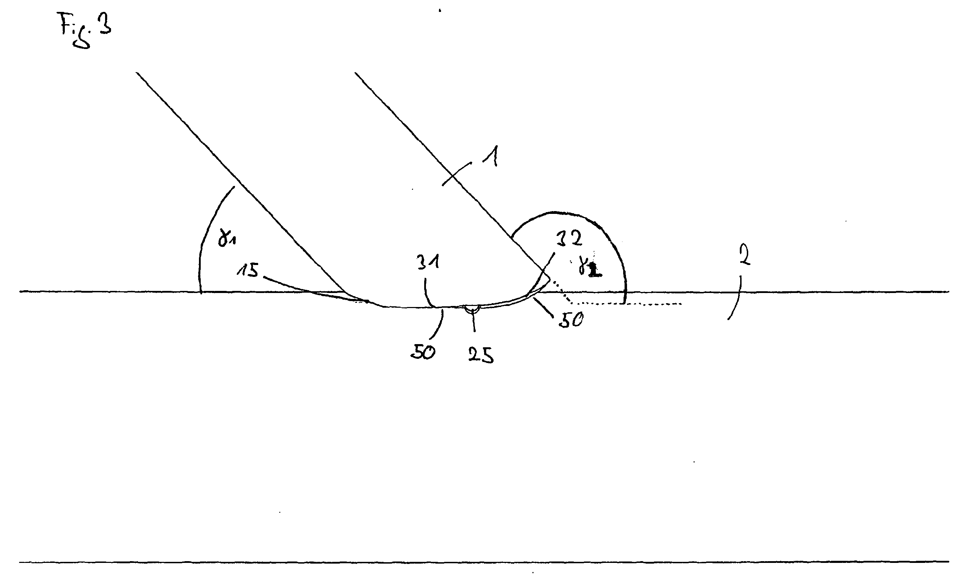

Das Rohrelement 1 weißt eine Schnittkante auf, welche durch Ausschneiden des Rohrelements aus einem Grundrohr erzeugt wurde. Wie in Figuren 2 und 3 gezeigt, kann das Rohrelement 1 durch die Form der Schnittkante auf der Oberfläche 3 eines Trägerelements 2 angeordnet und entlang der Schnittkante mit dieser verschweißt werden. Bei dem Trägerelement handelt es sich im Ausführungsbeispiel ebenfalls um ein Rohr. Insbesondere kann es sich dabei ebenfalls um ein Stahlrohr handeln. Der Durchmesser des Trägerelements ist dabei größer als der Durchmesser des Rohrelements.

Erfindungsgemäß sind an der Schnittkante des Rohrelements Nocken 15, 20 und 25 vorgesehen, mit welchen das Rohrelement auf der Oberfläche des Trägerelements 2 aufgesetzt werden kann. Durch die Nocken wird die Ausrichtung des Rohrelements auf der Oberfläche des Trägerelements 2 eindeutig festgelegt. Hierdurch ergibt sich in den Bereichen zwischen den Nocken ein definierter Luftspalt 50, welcher ein prozeßsicheres Durchschweißen erlaubt.

Das Rohrelement weist dabei eine erste Nocke 15 auf, welche in einem Bereich angeordnet ist, in welchem die Oberfläche des Rohrelements 1 einen spitzen Winkel mit der Oberfläche des Trägerelements einschließt. Dieser Winkel ist in Figur 3 als _{Y1} eingezeichnet. Der Winkel zwischen den beiden Oberflächen wird dabei in eine Ebene gemessen, in welcher die Mittelachse des Rohrelements 1 verläuft. Der Winkel wird dann in dieser Ebene zwischen der Oberfläche des Rohrelements und der Oberfläche des Trägerelements bestimmt.

Der kleinste Winkel _{y} zwischen den beiden Oberflächen entspricht dabei dem Winkel zwischen den Mittelachsen des Rohrelements und des Trägerelements. Vorteilhafterweise ist dieser Winkel dabei kleiner als 85°, weiterhin vorteilhafterweise kleiner als 80°.

In dem der ersten Nocke gegenüberliegenden Bereich schließt die Oberfläche des Rohrelements mit der Oberfläche des Trägerelements dagegen einen stumpfen Winkel Y₂ ein. Hier ist im Ausführungsbeispiel ein Luftspalt 50 vorgesehen, welcher ein Durchschweißen ermöglicht.

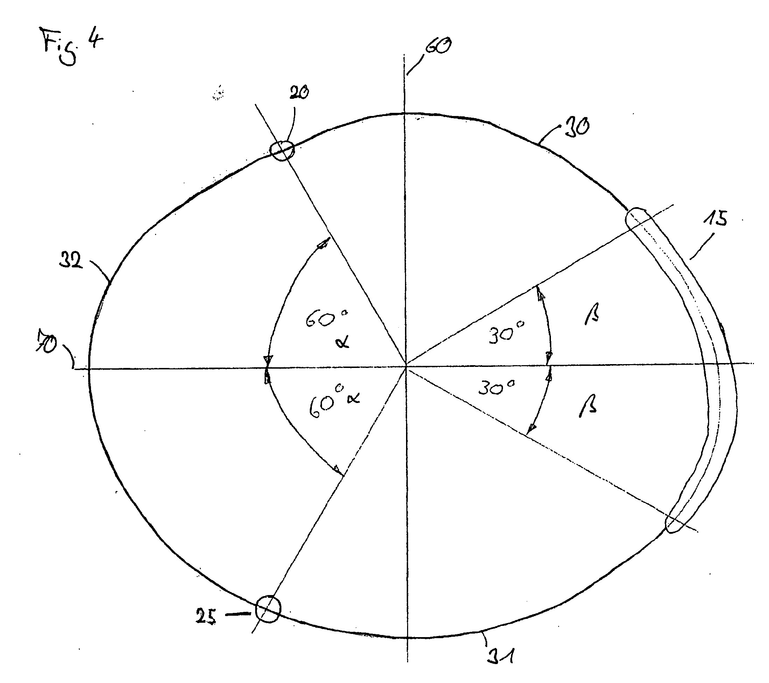

Wie auch aus Figur 4 ersichtlich, erstreckt sich die erste Nocke 15 über einen relativ großen Bereich von circa 60°. In diesem Bereich ist die Schnittfläche so geformt, daß sie flächig auf der Oberfläche des Trägerelements 2 aufliegt. In diesem Bereich wird zum Verschweißen eine Kehlnaht zwischen der Oberfläche der Rohrelements 1 und des Trägerelements 2 eingesetzt.

An die erste Nocke 15 schließen auf beiden Seiten Bereiche 30 und 31 an, in welchen ein Luftspalt 50 vorgesehen ist. An dem Bereich 30 schließt dabei die zweite Nocke 20 an, an den Bereich 31 die dritte Nocke 25. Zwischen der zweiten Nocke 20 und der dritten Nocke 25 ist ein Bereich 32 vorgesehen, in welchem ebenfalls ein Luftspalt 50 vorgesehen ist. Der Luftspalt weist dabei über seine gesamte Länge eine im wesentlichen gleichbleibende Höhe von circa 2 mm auf. Die Schnittkante ist dabei im Bereich des Luftspalts nach außen hin angeschrägt, so daß der Abstand zwischen der Oberfläche des Trägerelements und der Schnittkante nach au-βen hin größer wird. Die Höhe des Luftspaltes ergibt sich damit durch den Abstand zwischen der Oberfläche des Trägerelements und der Innenkante der Schnittkante. Im Bereich der Luftspalten entspricht die Innenkante der Schnittkante dabei einer Kurve, welche ohne die Nocken zu einer umlaufenden Kontaktlinie mit der Oberfläche des Trägerelements führen würde.

Die Anordnung der drei Nocken 15, 20 und 25 sowie der drei Bereiche 30, 31 und 32, in welchen der Luftspalt angeordnet ist, ist nochmals schematisch in Figur 4 gezeigt. Die Dicke der Wandung des Rohrteils ist in dieser Prinzipzeichnung nicht gezeigt. Diese Dicke ist aber ohnehin in allen diesen Bereichen gleich groß.

In Fig. 4 ist zu erkennen, daß die erste Nocke 15 sich über einen Winkelbereich von circa 60° erstreckt. Die beiden Nocken 20 und 25 sind jeweils circa 120° vom Mittelpunkt der ersten Nocke 15 entfernt angeordnet, so daß zwischen der zweiten Nocke 20 und der dritten Nocke 25 ebenfalls ein Winkel von circa 120° liegt. Der Winkel wird dabei jeweils bezüglich der Mittelachse des Rohrelements gemessen.

Mit 60 ist dabei die Achse eingezeichnet, um welche das Rohrelement gegenüber der Oberfläche des Trägerelements geneigt ist. Weiterhin ist eine zu dieser Neigungsachse 60 senkrecht stehende Symmetrieebene 70 eingezeichnet. Die Anordnung der Nocken ist dabei bezüglich dieser Symmetrieebene 70 symmetrisch. Insbesondere erstreckt sich die erste Nocke 15 gegenüber dieser Symmetrieebene 70 in die eine Richtung um den gleichen Winkel β wie in die andere Richtung. Weiterhin sind die zweite Nocke 20 und die dritte Nocke 25 gegenüber der Symmetrieebene 70 jeweils im gleichen Winkel α angeordnet.

Anders als bei der ersten Nocke 15, bei welcher sich ein relativ großer Kontaktbereich mit der Oberfläche des Trägerelements 2 ergibt, sind die beiden Nocken 20 und 25 relativ klein, so daß sich ein kleiner, im wesentlichen punktförmiger Kontakt ergibt. Wie aus Figur 2 ersichtlich, ist dabei die Schnittkante auch im Bereich der Nocken 20 und 25 gegenüber der Oberfläche 3 des Trägerelements nach oben geneigt, so daß der Kontakt an der Innenkante der Schnittkante stattfindet. Hierdurch behindern die beiden Nocken 20 und 25 die Durchschweißung möglichst wenig.

Wie aus Figur 1 ersichtlich, werden die zweite Nocke 20 und die dritte Nocke 25 jeweils durch Vorsprünge auf der sie umgebenden Schnittfläche gebildet. Die erste Nocke 15 wird ebenfalls durch einen langgestreckten Vorsprung gebildet, welcher durch die gleichzeitige Änderung in der Schrägung der Schnittfläche jedoch nur an den Übergangsbereichen 16 deutlich erkennbar ist. Alternativ zu der in Figur 1 gezeigten Ausführungsform könnte auch jeweils ein fließender Übergang zwischen den Bereichen mit Nocken und den Bereichen mit Luftspalt vorgesehen sein. Bei einem fließenden Übergang wäre jedoch der Übergangsbereich, in welchem der Luftspalt kleiner als seine optimale Größe von circa 2 mm ist, größer.

Die erfindungsgemäße Schnittkante wird vorteilhafterweise hergestellt, indem ein Grundrohr in einer Scheidemaschine entlang der Schnittkante geschnitten wird. Vorteilhafterweise wird das Grundrohr dabei um seine Mittelachse gedreht, während ein Schneidwerkzeug durch entsprechende Positionierung und Ausrichtung die gewünschte Schnittkante erzeugt. Die vorliegende Erfindung umfaßt daher auch eine entsprechende Maschine zum Herstellen einer solchen Schnittkante. Vorteilhafterweise wird dabei ein Schneidbrenner als Schneidwerkzeug eingesetzt. Alternativ kann zum Herstellend er Schnittkante auch ein abspanendes Verfahren eingesetzt werden.

Das Verschweißen mit dem Trägerelement 2 erfolgt dabei, indem zunächst das Rohrelement auf die Oberfläche des Trägerelements 2 aufgesetzt wird, so daß die Nocken mit dieser Oberfläche in Kontakt stehen. Daraufhin wird im Bereich der ersten Nocke 15 eine Kehlnaht erzeugt. In den übrigen Bereichen wird die Schnittfläche selbst mit der Oberfläche des Trägerelements verschweißt. Die Nocken erlauben dabei eine prozeßsichere Positionierung des Rohrelements auf der Oberfläche des Trägerelements. Durch den erfindungsgemäßen Luftspalt kann dabei eine Durchschweißung erreicht werden. Insbesondere kann hierdurch ein Schweißroboter eingesetzt werden. Vorteilhafterweise wird dabei ein Schweißgerät entlang der Schnittkante geführt, um die Verschweißung herzustellen.

Die vorliegende Erfindung kommt besonders vorteilhaft bei Gitterstücken zum Einsatz, bei welchen die Diagonalstreben von erfindungsgemäßen Rohrelementen gebildet werden. Diese werden auf beiden Seiten erfindungsgemäß zugeschnitten und dann zwischen zwei Längsstreben eingeschweißt. Insbesondere handelt es sich bei den Gitterstücken um Elemente eines Umschlaggerätes, insbesondere eines Kranes.

Die vorliegende Erfindung ermöglicht durch die erfindungsgemäße Gestaltung der Schnittfläche eine ebenso prozeßsichere wie qualitativ hochwertige Verschweißung.

## Patentansprüche

1. Rohrelement (10) mit einer Schnittkante zum Anschweißen an ein rohrförmiges Trägerelement (2) mit einer zylinderförmigen Oberfläche, wobei die Schnittkante so aus einem Grundrohr geschnitten ist, dass das Rohrelement (1) auf der zylinderförmigen Oberfläche des Trägerelements (2) angeordnet und entlang der Schnittkante mit dieser verschweißt werden kann,
wobei die Schnittkante eine erste Nocke (15) aufweist, mit welcher das Rohrelement (1) auf der zylinderförmigen Oberfläche des Trägerelements (2) aufgesetzt werden kann, so dass neben der Nocke (15) ein Luftspalt zwischen der zylinderförmigen Oberfläche des Trägerelements (2) und der Schnittkante verbleibt, wobei die erste Nocke (15) in einem ersten Bereich angeordnet ist, in dem die zylinderförmige Oberfläche des Rohrelements (1) mit der Oberfläche des Trägerelements (2) in einer Ebene in welcher die Mittelachse des Rohrelementes (1) verläuft, einen spitzen Winke (γ₁) einschließt, wobei in einem zweiten Bereich, welcher der ersten Nocke (15) bezüglich der Mittelachse des Rohrelements (1) genüberliegt und in welchem die zylinderförmige (2) Oberfläche des Rohrelements (1) mit der Oberfläche des Trägerelements (2) in einer Ebene, in welcher die Mittelachse des Rohrelementes verläuft, einen stumpfen Winkel (γ₂) einschließt, ein Luftspalt zwischen der Oberfläche des Trägerelements und der Schnittkante verbleibt, wobei der Luftspalt über seine Länge eine im wesentlichen konstante Höhe aufweist,
**dadurch gekennzeichnet,**
**dass** die Schnittkante mindestens eine zweite Nocke (20) aufweist, mit welcher sie auf der zylinderförmigen Oberfläche des Trägerelements (2) aufsetzbar ist.

2. Rohrelement (1) nach Anspruch 1, wobei die Schnittkante mindestens eine dritte Nocke (25) aufweist, mit welcher sie auf der Oberfläche des Trägerelements (2) aufsetzbar ist.

3. Rohrelement (1) nach Anspruch 1 oder 2, wobei die Mittelpunkte der Nocken (15,20,25) mindestens 60°, vorteilhafterweise mindestens 90°, weiterhin vorteilhafterweise circa 120° voneinander entfernt liegen.

4. Set aus einem Rohrelement (1) nach einem der vorangegangenen Ansprüche und einem Trägerelement (2).

5. Set nach Anspruch 4, wobei die Kontaktlinie der Schnittkante mit der Oberfläche des Trägerelements (2) im Bereich der ersten Nocke eine Länge zwischen 20° und 100°, weiterhin vorteilhafterweise zwischen 40° und 80°, weiterhin vorteilhafterweise von ca. 60° aufweist, und/oder wobei die Kontaktlinie der Schnittkante mit der Oberfläche des Trägerelements (2) im Bereich der zweiten (20) und/oder dritten Nocke (25) weniger als 20°, weiterhin vorteilhafterweise weniger als 10 % und wobei weiterhin vorteilhafterweise der Kontakt im Bereich der zweiten (20) und/oder dritten Nocke (25) im Wesentlichen punktförmig ist.

6. Bauteil, insbesondere Gitterstück, bei welchem Bauteil ein Rohrelement (1) nach einem der Ansprüche 1 bis 3 mit einem Trägerelement (2) entlang der Schnittkante verschweißt wurde, wobei vorteilhafterweise das Trägerelement (2) eine Längsstrebe und das Rohrelement eine Diagonalstrebe bildet.

7. Bau- oder Umschlagmaschine, insbesondere Kran, mit einem Bauteil nach Anspruch 6.

8. Maschine zum automatischen Schneiden einer Schnittkante eines Rohrelementes (1) nach einem der Ansprüche 1 bis 3 aus einem Grundrohr, wobei die Maschine eine Steuerung aufweist, welche so programmiert wurde, daß ein erfindungsgemäßes Rohrelement (1) automatisch herstellbar ist.

9. Verfahren zum Herstellen eines Rohrelements (1) nach einem der Ansprüche 1 bis 3, wobei ein Schneidwerkzeug an dem Grundrohr entlang der gewünschten Schnittkante geführt wird.

10. Verfahren zum Herstellen eines Bauteils, insbesondere eines Gitterstückes, durch Verschweißen eines Rohrelements (1) mit einem rohrförmigen Trägerelement (2),
wobei das Rohrelement (1) eine Schnittkante zum Anschweißen an das Trägerelement (2) aufweist, wobei die Schnittkante so aus einem Grundrohr geschnitten ist, dass das Rohrelement (1) auf der Zylinderförmigen Oberfläche des Trägerelements (2) angeordnet und entlang der Schnittkante mit dieser verschweißt werden kann,
wobei die Schnittkante eine erste Nocke (15) aufweist, mit welcher das Rohrelement (1) auf der Oberfläche des Trägerelements (2) aufgesetzt wird, so dass neben der Nocke (15) ein Luftspalt zwischen der Oberfläche des Trägerelements (2) und der Schnittkante verbleibt wobei die erste Nocke (15) in eine ersten Bereich angeordnet ist, in dem die Oberfläche des Rohrelements (1) mit der Oberfläche des Trägerelements (2) in einer Ebene, in welcher die Mittelachse des Rohrelementes verläuft, einen spitzen Winkel (γ₁) einschließt,
und wobei die Schnittkante mindestens eine zweite Nocke (20) aufweist, mit welcher sie auf der Oberfläche des Trägerelements (1) aufgesetzt wird, wobei in einem zweiten Bereich, welcher der ersten Nocke (15) bezüglich der Mittelachse des Rohrelements (1) gegenüberliegt und in welchem die Oberfläche des Rohrelements (1) mit der Oberfläche des Trägerelements (2) in einer Ebene, in welcher die Mittelachse des Rohrelementes (1) verläuft, einen stumpfen Winkel (γ₂) einschließt, ein Luftspalt zwischen der Oberfläche des Trägerelements (2) und der Schnittkante verbleibt, wobei der Luftspalt über seine Länge eine im wesentlichen konstante Höhe aufweist, mit den Schritten:
- Aufsetzen des Rohrelements (1) auf der Oberfläche des Trägerelements (2), so dass die Schnittkante mit den Nocken (15,20) auf der Oberfläche aufliegt, und
- Verschweißen von Rohrelement (1) und Trägerelement (2) entlang der Schnittkante.

11. Verfahren nach Anspruch 10, wobei ein Rohrelement nach einem der Ansprüche 1 bis 3 oder ein Set nach einem der Ansprüche 4 oder 5 verschweißt wird.

## Claims

1. A pipe element (1) with a trimmed edge for welding onto a pipe-shaped carrier (2) having a cylindrical surface, wherein the trimmed edge is cut from a base tube so that the pipe element (1) can be arranged on the cylindrical surface of the carrier (2) and welded to it along the trimmed edge,
wherein the trimmed edge has a first cam (15) with which the pipe element (1) can be placed on the cylindrical surface of the carrier (2) so that an air gap remains between the cylindrical surface of the carrier (2) and the trimmed edge next to the cam (15), with the first cam (15) being arranged in a first region in which the cylindrical surface of the pipe element (1) makes an acute angle (γ₁) with the surface of the carrier (2) in a plane in which the center axis of the pipe element (1) extends,
wherein an air gap remains between the surface of the carrier and the trimmed edge in a second region which lies opposite the first cam (15) with respect to the center axis of the pipe element (1) and in which the cylindrical surface of the pipe element (1) makes an obtuse angle (γ2) with the surface of the carrier (2) in a plane in which the center axis of the pipe element extends, with the air gap having a substantially constant height over its length,
**characterized in that**
the trimmed edge has at least a second cam (20) with which it can be placed on the cylindrical surface of the carrier (2).

2. The pipe element (1) according to claim 1, wherein the trimmed edge has at least a third cam (25), with which the trimmed edge can be placed on the surface of the carrier (2).

3. The pipe element (1) according to claim 1 or 2, wherein the midpoints of the cams (15, 20, 25) lie at a distance of at least 60°, advantageously at least 90°, further advantageously approximately 120° from one another.

4. As set made of a pipe element (1) according to any one of the preceding claims and of a carrier (2).

5. The set according to claim 4, wherein the line of contact of the trimmed edge with the surface of the carrier (2) in the region of the first cam has a length between 20° and 100°, further advantageously between 40° and 80°, further advantageously of approximately 60°; and/or wherein the line of contact of the trimmed edge with the surface of the carrier (2) in the region of the second and/or third cams (25) is less than 20°, further advantageously less than 10% and wherein further advantageously the contact in the region of the second (20) and/or third cams (25) is substantially point-shaped.

6. A component, in particular a lattice element, in which component a pipe element (1) according to any one of claims 1 to 3 is welded with a carrier (2) along the trimmed edge, wherein the carrier (2) advantageously forms a longitudinal brace and the pipe element forms a diagonal brace.

7. A construction machine or material handling machine, in particular a crane, having a component according to claim 6.

8. A machine for automatically cutting a trimmed edge of a pipe element (1) according to any one of claims 1 to 3 made of a base tube, wherein the machine has a controller that is programmed so that a pipe element (1) according to the invention can be automatically fabricated.

9. A method for fabricating a pipe element (1) according to any one of claims 1 to 3, wherein a cutting tool is guided on a base tube along the desired trimmed edge.

10. A method for fabricating a component, in particular a lattice element, by welding a pipe element (1) with a pipe-shaped carrier (2),
wherein the pipe element (1) has a trimmed edge for welding to the carrier (2), wherein the trimmed edge is cut from a base tube so that the pipe element (1) can be arranged on the cylindrical surface of the carrier (2) and welded to it along the trimmed edge,
wherein the trimmed edge has a first cam (15), with which the pipe (1) is placed on the surface of the carrier (2) so that an air gap remains between the surface of the carrier (2) and the trimmed edge next to the cam (15), wherein the first cam (15) is located in a first region in which the surface of the pipe element (1) makes an acute angle with the surface of the carrier (2) in a plane in which the center axis of the pipe element (1) extends,
and wherein the trimmed edge has at least a second cam (20) with which it is placed on the surface of the carrier (1), wherein an air gap remains between the surface of the carrier (2) and the trimmed edge in a second region which is opposite the first cam (15) with respect to the center axis of the pipe element (1) and in which the surface of the pipe element (1) makes an obtuse angle (γ2) with the surface of the carrier (2) in a plane in which the center axis of the pipe element (1) extends, wherein the air gap has a substantially constant height over its length,
comprising the following steps:
- placing the pipe element (1) on the surface of the carrier (2) so that the trimmed edge with the cams (15, 20) lies on the surface, and
- welding the pipe element (1) and the carrier (2) along the trimmed edge.

11. The method of claim 10, wherein a pipe element according to any one of claims 1 to 3 or a set according to any one of claims 4 or 5 is welded.

## Revendications

1. Élément de tuyau (1) doté d'un bord de coupe pour souder sur un élément de support tubulaire (2) avec une surface cylindrique, étant entendu que le bord de coupe est coupé à partir d'un tuyau de base de telle sorte que l'élément de tuyau (1) est agencé sur la surface cylindrique de l'élément de support (2) et peut être soudé avec celui-ci le long du bord de coupe,
étant entendu que le bord de coupe présente une première came (15) avec laquelle l'élément de tuyau (1) peut être placé sur la surface cylindrique de l'élément de support (2) de telle sorte qu'il subsiste un entrefer à côté de la came (15) entre la surface cylindrique de l'élément de support (2) et le bord de coupe, étant entendu que la première came (15) est agencée dans une première zone dans laquelle la surface cylindrique de l'élément de tuyau (1) forme un angle aigu (α 1) avec la surface de l'élément de support (2) dans un plan dans lequel l'axe médian de l'élément de tuyau (1) s'étend,
étant entendu qu'il subsiste un entrefer entre la surface de l'élément de support et le bord de coupe dans une deuxième zone qui est située en opposition à la première came (15) par rapport à l'axe médian de l'élément de tuyau (1) et dans laquelle la surface cylindrique de l'élément de tuyau (1) forme un angle obtus (α 2) avec la surface de l'élément de support (2) dans un plan dans lequel l'axe médian de l'élément de tuyau s'étend, étant entendu que l'entrefer présente, une hauteur essentiellement constante sur toute sa longueur,
**caractérisé**
**en ce que** le bord de coupe présente au moins une deuxième came (20) avec laquelle il peut être placé sur la surface cylindrique de l'élément de support (2).

2. Élément de tuyau (1) selon la revendication 1, dans lequel le bord de coupe présente au moins une troisième came (25) avec laquelle il peut être placé sur la surface de l'élément de support (2).

3. Élément de tuyau (1) selon la revendication 1 ou 2, dans lequel les centres des cames (15, 20, 25) sont situés à distance l'un de l'autre d'au moins 60° , avantageusement d'au moins 90°, et de façon plus avantageuse d'environ 120°.

4. Ensemble composé d'un élément de tuyau (1) selon l'une des revendications précédentes et d'un élément de support (2).

5. Ensemble selon la revendication 4, dans lequel la ligne de contact du bord de coupe avec la surface de l'élément de support (2) dans la zone de la première came présente une longueur comprise entre 20° et 100°, de façon plus avantageuse entre 40° et 80° et de façon encore plus avantageuse d'environ 60° et/ou dans lequel la ligne de contact du bord de coupe avec la surface de l'élément de support (2) dans la zone de la deuxième (20) et/ou de la troisième came (25) présente une longueur inférieure à 20°, et de façon plus avantageuse inférieure à 10 %, et de plus, dans lequel le contact dans la zone de la deuxième (20) et/ou de la troisième came (25) présente essentiellement une forme de point.

6. Composant, en particulier pièce de grille, dans lequel composant un élément de tuyau (1) selon l'une des revendications 1 à 3 a été soudé avec un élément de support (2) le long du bord de coupe, étant entendu qu'avantageusement, l'élément de support (2) forme une traverse longitudinale et l'élément de tuyau une traverse diagonale.

7. Machine de construction ou de manutention, en particulier, grue, comprenant un composant selon la revendication 6.

8. Machine destinée à la découpe automatique d'un bord de coupe d'un élément de tuyau (1) selon l'une des revendications 1 à 3 à partir d'un tuyau de base, étant entendu que la machine présente une commande qui a été programmée de telle sorte qu'un élément de tuyau (1) selon l'invention peut être fabriqué automatiquement.

9. Procédé de fabrication d'un élément de tuyau (1) selon l'une des revendications 1 à 3, dans lequel un outil de coupe est guidé sur le tuyau de base le long du bord de coupe souhaité.

10. Procédé de fabrication d'un composant, en particulier d'une pièce de grille, par soudage d'un élément de tuyau (1) avec un élément de support tubulaire (2), étant entendu que l'élément de tuyau (1) est doté d'un bord de coupe pour souder sur l'élément de support (2), étant entendu que le bord de coupe est coupé à partir d'un tuyau de base de telle sorte que l'élément de tuyau (1) est agencé sur la surface cylindrique de l'élément de support (2) et peut être soudé avec celui-ci le long du bord de coupe, étant entendu que le bord de coupe présente une première came (15) avec laquelle l'élément de tuyau (1) est placé sur la surface de l'élément de support (2) de telle sorte qu'il subsiste un entrefer à côté de la came (15) entre la surface de l'élément de support (2) et le bord de coupe, étant entendu que la première came (15) est agencée dans une première zone dans laquelle la surface de l'élément de tuyau (1) forme un angle aigu (α 1) avec la surface de l'élément de support (2) dans un plan dans lequel l'axe médian de l'élément de tuyau s'étend,
et étant entendu que le bord de coupe présente au moins une deuxième came (20) avec laquelle il est placé sur la surface de l'élément de support (2), étant entendu qu'il subsiste un entrefer entre la surface de l'élément de support (2) et le bord de coupe dans une deuxième zone qui est située en opposition à la première came (15) par rapport à l'axe médian de l'élément de tuyau (1) et dans laquelle la surface de l'élément de tuyau (1) forme un angle obtus (α 2) avec la surface de l'élément de support (2) dans un plan dans lequel l'axe médian de l'élément de tuyau (1) s'étend, étant entendu que l'entrefer présente une hauteur essentiellement constante sur toute sa longueur,
comprenant les étapes consistant à :
- placer l'élément de tuyau (1) sur la surface de l'élément de support (2) de telle sorte que le bord de coupe prend appui sur la surface avec les cames (15, 20), et
- souder l'élément de tuyau (1) et l'élément de support (2) le long du bord de coupe.

11. Procédé selon la revendication 10, dans lequel un élément de tuyau selon l'une des revendications 1 à 3 ou un ensemble selon l'une des revendications 4 ou 5 est soudé.
